# EUROPÄISCHE PATENTANMELDUNG

(11) **EP 4 711 153 A1**
(43) Veröffentlichungstag der Anmeldung: **18.03.2026**
(21) Anmeldenummer: 25193669.6
(22) Anmeldetag: 04.08.2025
(51) Int. Cl.: B60C 9/04, B60C 9/06, B60C 9/07, B60C 23/02, B60C 23/06, B60C 23/20

(54) **FAHRZEUGREIFEN**

(30) Priorität: 17.09.2024 DE 102024208843
(71) Anmelder: Continental Reifen Deutschland GmbH, 30175 Hannover (DE)
(72) Erfinder: Berger, Christoph, 30175 Hannover (DE); Ahmed, Owais, 30175 Hannover (DE); Römer, Justus, 30175 Hannover (DE); Gellings, Marco, 30175 Hannover (DE)
(74) Vertreter: Continental Corporation

(57) **Zusammenfassung**

Die Erfindung betrifft einen Fahrzeugreifen (1), aufweisend:
a) eine Reifenkarkasse (4) mit einem ersten Seitenbereich (5), einem zweiten Seitenbereich (6) und einem dazwischen angeordneten Zentralbereich (7), aufweisend zumindest eine Karkasslage (8, 18) mit einer Vielzahl von gummierten Festigkeitsträgern (9), die sich jeweils durch den ersten Seitenbereich (5), den zweiten Seitenbereich (6) und den Zentralbereich (7) der Reifenkarkasse (4) erstrecken,
b) einen relativ zur Reifenkarkasse (4) radial weiter außen liegenden Laufstreifen (4),
c) eine relativ zur Reifenkarkasse (4) radial weiter innen liegende Reifeninnenschicht (11),

wobei zumindest ein Teil der gummierten Festigkeitsträger (9) der Karkasslage (8, 18) bezogen auf die Umfangsrichtung (3) im ersten Seitenbereich (5) und im zweiten Seitenbereich (6) einen Winkel (14) im Bereich von 80° bis 90° einschließen und im Zentralbereich (7) einen Winkel (15) im Bereich von 5° bis 75° einschließt,
wobei der Fahrzeugreifen (1) eine Sensorvorrichtung (12) aufweist, wobei die Sensorvorrichtung (12) zur Bestimmung einer physikalisch messbaren Größe, wobei in Abhängigkeit der physikalisch messbaren Größe eine Einsatzfähigkeit des Fahrzeugreifens (1) bestimmt werden kann, geeignet ist.

## Beschreibung

Die Erfindung betrifft einen Fahrzeugreifen.

Die Erfindung geht aus von einem Fahrzeugreifen, aufweisend:
a) eine Reifenkarkasse mit einem ersten Seitenbereich, einem zweiten Seitenbereich und einem dazwischen angeordneten Zentralbereich, aufweisend zumindest eine Karkasslage mit einer Vielzahl von gummierten Festigkeitsträgern, die sich jeweils durch den ersten Seitenbereich, den zweiten Seitenbereich und den Zentralbereich der Reifenkarkasse erstrecken,
b) einen relativ zur Reifenkarkasse radial weiter außen liegenden Laufstreifen,
c) eine relativ zur Reifenkarkasse radial weiter innen liegende Reifeninnenschicht,
wobei zumindest ein Teil der gummierten Festigkeitsträger der Karkasslage bezogen auf die Umfangsrichtung im ersten Seitenbereich und im zweiten Seitenbereich einen Winkel im Bereich von 80° bis 90° einschließen und im Zentralbereich einen Winkel im Bereich von 5° bis 75° einschließen.

Die Umfangsrichtung kann insbesondere als eine Umlaufrichtung des Fahrzeugreifens bezeichnet werden. Dabei handelt es sich bei der Umlaufrichtung um die Richtung, in die der Fahrzeugreifen um eine Rotationsachse rotierbar ist.

Aus dem Stand der Technik sind Fahrzeugreifen bekannt. Die aus dem Stand der Technik bekannten Fahrzeugreifen weisen insbesondere eine Reifenkarkasse mit einem ersten Seitenbereich, einem zweiten Seitenbereich und einem dazwischen angeordneten Zentralbereich auf, wobei die Reifenkarkasse zumindest eine Karkasslage mit einer Vielzahl von gummierten Festigkeitsträgern, die sich jeweils durch den ersten Seitenbereich, den zweiten Seitenbereich und den Zentralbereich der Reifenkarkasse erstrecken, aufweist. Dabei schließt zumindest ein Teil der gummierten Festigkeitsträger der Karkasslage bezogen auf die Umfangsrichtung im ersten Seitenbereich und im zweiten Seitenbereich einen Winkel im Bereich von 80° bis 90° ein und im Zentralbereich einen Winkel im Bereich von 5° bis 75° ein.

Die gemäß dem Stand der Technik in Fahrzeugreifen angeordneten Reifenkarkassen sind dabei insbesondere aus einer oder mehrerer Karkasslagen geformt, die jeweils eine Vielzahl von gummierten, das heißt in einer vernetzten Kautschukmischung eingebetteten, Festigkeitsträgern umfassen.

Bei einer radialen Richtung eines Fahrzeugreifens handelt es sich um eine Richtung die senkrecht auf der Rotationsachse des Fahrzeugreifens steht. Eine radiale Richtung verläuft parallel zu einem Radius eines Luftreifens. Der Radius eines Fahrzeugreifens ist der Radius des Kreises, dessen Form der Fahrzeugreifen in Umlaufrichtung grundsätzlich folgt, der Radius liegt rechtwinklig zu der Rotationsachse und rechtwinklig zu der Umlaufrichtung. Radial weiter außen bedeutet bezogen auf die Rotationsachse, dass eine erste Komponente des Fahrzeugreifens, die radial weiter außen liegt als eine zweite Komponente des Fahrzeugreifens, weiter von der Rotationsachse entfernt liegt als die zweite Komponente des Fahrzeugreifens. Radial weiter innen bedeutet bezogen auf die Rotationsachse, dass eine erste Komponente des Fahrzeugreifens, die radial weiter innen liegt als eine zweite Komponente des Fahrzeugreifens, näher zu der Rotationsachse liegt als die zweite Komponente des Fahrzeugreifens.

In einem aus dem Stand der Technik bekannten, sogenannten Radialreifen verlaufen die gummierten Festigkeitsträger der Karkasslagen im Wesentlichen radial. Dies bedeutet, dass die gummierten Festigkeitsträger über eine gesamte Breite der Karkasse quer zur Umfangsrichtung des Fahrzeugreifens mit der Umfangsrichtung einen Winkel von etwa 90° einschließen. Der entsprechende Winkel kann auch als Kordwinkel der in der Karkasslage vorhandenen Festigkeitsträger bezeichnet werden. Anhand der Definition dieses Kordwinkels in Abhängigkeit von der Umfangsrichtung, ist es für den Fachmann in der Praxis insbesondere möglich, den Kordwinkel, also den relativen Winkel des Festigkeitsträgers zur Umfangsrichtung, zu bestimmen.

Die Karkasse des erfindungsgemäßen Fahrzeugreifens weist drei Bereiche auf: einen ersten Seitenbereich, einen Zentralbereich und einen zweiten Seitenbereich. Hierbei kann der Zentralbereich zweckmäßigerweise der Bereich der Reifenkarkasse sein, der im Fahrzeugreifen unterhalb des Laufstreifens angeordnet ist, wohingegen der erste und zweite Seitenbereich beispielsweise die Karkasse im Bereich der Flanken oder Seiten des Fahrzeugreifens bilden.

Der Zentralbereich liegt radial weiter innen als der Laufstreifen.

Erfindungsgemäß wird im Fahrzeugreifen nämlich von einer streng radialen Konstruktion abgewichen, indem nämlich lediglich in dem ersten und zweiten Seitenbereich eine weitgehend radiale Anordnung der Festigkeitsträger, also mit einem Kordwinkel von 80° bis 90°, eingestellt wird. Innerhalb des Zentralbereichs der Karkasse wird hingegen ein Kordwinkel im Bereich von 5° bis 75° eingestellt, so dass eine Reifenkarkasse erhalten wird, die als teilweise gewinkelte Reifenkarkasse bezeichnet werden kann. Ein Kordwinkel von 5° bis 75° bedeutet, dass die gummierten Festigkeitsträger der Reifenkarkasse einen Winkel von 5° bis 75° mit der Umfangsrichtung oder der Umlaufrichtung einschließen.

Diese aus dem Stand der Technik bekannten Fahrzeugreifen, bei denen Innerhalb des Zentralbereichs der Karkasse Kordwinkel im Bereich von 5° bis 75° eingestellt sind, weisen eine ausreichende mechanische Stabilität auf. Ausreichend stabil bedeutet insbesondere, dass der Fahrzeugreifen den Beanspruchungen während eines regulären Betriebs des Fahrzeugreifens standhalten kann. Ein regulärer Betrieb des Fahrzeugreifens ist beispielsweise dann gegeben, wenn der Fahrzeugreifen innerhalb der für ihn vorgegebenen technischen Nutzungsparameter genutzt wird. Zu den technischen Nutzungsparametern zählen beispielsweise eine maximal zulässige Rotationsgeschwindigkeit des Fahrzeugreifens.

Bei diesen aus dem Stand der Technik bekannten Fahrzeugreifen könnte die Nutzung des Fahrzeugreifens in einem irregulären Betrieb mit einer Möglichkeit einer Beschädigung des Fahrzeugreifens einhergehen.

Der Erfindung liegt daher die Aufgabe zugrunde einen Fahrzeugreifen bereitzustellen, bei dem insbesondere während der Nutzung des Fahrzeugreifens in einem irregulären Betrieb die Möglichkeit einer Beschädigung des Fahrzeugreifens erkannt werden kann.

Gelöst wird die erfindungsgemäß gestellte Aufgabe dadurch, dass der Fahrzeugreifen eine Sensorvorrichtung aufweist, wobei die Sensorvorrichtung zur Bestimmung einer physikalisch messbaren Größe, wobei in Abhängigkeit der physikalisch messbaren Größe eine Einsatzfähigkeit des Fahrzeugreifens bestimmt werden kann, geeignet ist.

Bei der physikalisch messbaren Größe handelt es sich beispielsweise um eine quantifizierbare, sensorisch erfassbare und messbare physikalische Größe, beispielsweise eine elektrische oder elektrochemische Größe, oder beispielsweise eine physikalische Zustandsgröße wie eine Temperatur.

Bei der physikalisch messbaren Größe handelt es sich beispielsweise um einen Druck, der in einem Innenraum des Fahrzugsreifens herrscht. Ein bestimmter Druckwert oder eine bestimmte Änderung eines Druckes kann in einem Wirkzusammenhang mit einer möglichen oder tatsächlichen Beschädigung des Fahrzeugreifens stehen.

Durch den erfindungsgemäßen Umstand, wonach, der Fahrzeugreifen eine Sensorvorrichtung aufweist, wobei die Sensorvorrichtung zur Bestimmung einer physikalisch messbaren Größe, wobei in Abhängigkeit der physikalisch messbaren Größe eine Einsatzfähigkeit des Fahrzeugreifens bestimmt werden kann, geeignet ist, kann die Möglichkeit einer möglichen oder tatsächlichen Beschädigung des Fahrzeugreifens bestimmt werden.

Somit wird ein verbesserter Fahrzeugreifen bereitgestellt.

Bei dem Fahrzeugreifen handelt es sich beispielsweise um einen PKW-Reifen oder einen LKW-Reifen oder einen Zweirad-Reifen ist.

Die Erfindung betrifft weiter ein Fahrzeugrad, aufweisend eine Felge und einen Fahrzeugreifen, wobei der Fahrzeugreifen aufweist:
a) eine Reifenkarkasse mit einem ersten Seitenbereich, einem zweiten Seitenbereich und einem dazwischen angeordneten Zentralbereich, aufweisend zumindest eine Karkasslage mit einer Vielzahl von gummierten Festigkeitsträgern, die sich jeweils durch den ersten Seitenbereich, den zweiten Seitenbereich und den Zentralbereich der Reifenkarkasse erstrecken,
b) einen relativ zur Reifenkarkasse radial weiter außen liegenden Laufstreifen,
c) eine relativ zur Reifenkarkasse radial weiter innen liegende Reifeninnenschicht,

wobei zumindest ein Teil der gummierten Festigkeitsträger der Karkasslage bezogen auf die Umfangsrichtung im ersten Seitenbereich und im zweiten Seitenbereich einen Winkel im Bereich von 80° bis 90° einschließen und im Zentralbereich einen Winkel im Bereich von 5° bis 75° einschließt,
wobei das Fahrzeugrad eine Sensorvorrichtung aufweist, wobei die Sensorvorrichtung zur Bestimmung einer physikalisch messbaren Größe, wobei in Abhängigkeit der physikalisch messbaren Größe eine Einsatzfähigkeit des Fahrzeugreifens bestimmt werden kann, geeignet ist.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung, insbesondere des erfindungsgemäßen Fahrzeugreifens oder des erfindungsgemäßen Fahrzeugrades, schließt zumindest ein Teil der gummierten Festigkeitsträger der Karkasslage bezogen auf die Umfangsrichtung des Fahrzeugreifens im ersten Seitenbereich und im zweiten Seitenbereich einen Winkel im Bereich von 85° bis 90°, bevorzugt im Bereich von 88° bis 90°, ein. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, schließt zumindest ein Teil der gummierten Festigkeitsträger der Karkasslage bezogen auf die Umfangsrichtung des Fahrzeugreifens im Zentralbereich einen Winkel im Bereich von 10° bis 70°, bevorzugt im Bereich von 15° bis 55°, besonders bevorzugt im Bereich von 20° bis 35°, ein. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, ist der Laufstreifen in radial nach außen weisender Richtung zumindest teilweise, bevorzugt vollständig, oberhalb des Zentralbereichs angeordnet.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, liegt der Quotient aus der Breite der Aufstandsfläche und der Breite des Zentralbereichs, jeweils quer zur Umfangsrichtung des Fahrzeugreifens, im Bereich von 0,7 bis 2, bevorzugt im Bereich von 0,8 bis 1,6, besonders bevorzugt im Bereich von 0,9 bis 1,2 und ganz besonders bevorzugt im Bereich von 0,95 bis 1,05.

Bei einer Erstreckung quer zur Umfangsrichtung handelt es sich um eine Erstreckung parallel zu der Rotationsachse und rechtwinklig zu der Umfangsrichtung.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, umfasst die Reifenkarkasse zwei oder mehr Karkasslagen, wobei in jeder Karkasslage zumindest ein Teil der gummierten Festigkeitsträger, bevorzugt sämtliche gummierten Festigkeitsträger, bezogen auf die Umfangsrichtung des Fahrzeugreifens im ersten Seitenbereich und im zweiten Seitenbereich einen Winkel im Bereich von 80° bis 90° und im Zentralbereich einen Winkel im Bereich von 5° bis 75° einschließt. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, umfasst die Reifenkarkasse zwei Karkasslagen, wobei die gummierten Festigkeitsträger der beiden Karkasslagen im Zentralbereich relativ zueinander einen Winkel im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen.

Durch den erfindungsgemäßen Umstand, wonach die Reifenkarkasse zwei Karkasslagen umfasst, wobei die gummierten Festigkeitsträger der beiden Karkasslagen im Zentralbereich relativ zueinander einen Winkel im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen wird ein Kreuzverband der beiden Karkasslagen bewirkt. Dieser Kreuzverband führt zu einer Erhöhung der mechanischen Stabilität des Fahrzeugreifens.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, ist im Fahrzeugreifen zwischen dem Laufstreifen und der Reifenkarkasse zumindest eine weitere Lage, bevorzugt genau eine weitere Lage, angeordnet.

Bei der weiteren Lage kann es sich beispielsweise um einen Gürtel des Fahrzeugreifens oder um eine Cap Ply des Fahrzeugreifens handeln.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, ist zumindest eine der weiteren Lagen eine Gürtellage, wobei die weitere Lage bevorzugt gummierte Festigkeitsträger umfasst, die besonders bevorzugt bezogen auf die Umfangsrichtung des Fahrzeugreifens einen Winkel im Bereich von 10° bis 70°, weiter bevorzugt im Bereich von 15° bis 55°, noch weiter bevorzugt im Bereich von 20° bis 35°, einschließen. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, ist zumindest eine der weiteren Lagen eine Cap-Ply Lage, wobei die weitere Lage bevorzugt gummierte Festigkeitsträger umfasst, die besonders bevorzugt bezogen auf die Umfangsrichtung des Fahrzeugreifens einen Winkel im Bereich von 0° bis 5° einschließen.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, ist die Sensorvorrichtung formschlüssig, kraftschlüssig oder stoffschlüssig, beispielsweise mittels eines Klebemittels oder mittels eines Reifendichtmittels, mit der Reifeninnenschicht verbunden.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, ist die Sensorvorrichtung an der Reifeninnenschicht des Fahrzeugreifens oder an einer Außenfläche des Fahrzeugreifens oder an der Reifenkarkasse oder in der Reifenkarkasse angeordnet.

Gemäß einer nächsten vorzugsweisen Ausgestaltungsform der vorliegenden Erfindung, insbesondere des erfindungsgemäßen Fahrzeugreifens oder des erfindungsgemäßen Fahrzeugrades, weist die Sensorvorrichtung eine Drucksensorkomponente, eine Temperatursensorkomponente, eine piezoelektrische Sensorkomponente, eine Sensorkomponente geeignet zur Messung einer elektrischen Kapazität, eine Sensorkomponente geeignet zur Messung einer elektrischen Induktion, eine Sensorkomponente geeignet zur Messung eines elektrischen Widerstands, eine Sensorkomponente geeignet zur Messung eines Magnetfeldes, eine optische Sensorkomponente, eine thermoelektrische Sensorkomponente und/oder eine akustische Sensorkomponente auf.

Eine optische Sensorkomponente ist beispielsweise geeignet, eine Änderung des Fahrzeugreifens und insbesondere einer Komponente des Fahrzeugreifens mittels einer optischen Kamera zu erfassen. Eine thermoelektrische Sensorkomponente ist beispielsweise geeignet, eine thermoelektrische Änderung des Fahrzeugreifens und insbesondere einer Komponente des Fahrzeugreifens zu erfassen. Eine akustische Sensorkomponente ist beispielsweise geeignet, ein solche Änderung des Fahrzeugreifens und insbesondere einer Komponente des Fahrzeugreifens zu erfassen, die zu einer Erzeugung akustischer Wellen führt.

Weitere Vorteile, Merkmale und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Fahrzeugreifens gemäß einer Ausführungsform;
Fig. 2: Eine schematische Darstellung eines Bereichs eines erfindungsgemäßen Fahrzeugreifens gemäß einer Ausführungsform;
Fig. 3: Eine schematische Darstellung eines erfindungsgemäßen Fahrzeugreifens gemäß einer weiteren Ausführungsform;
Fig. 4: Eine schematische Darstellung eines erfindungsgemäßen Fahrzeugreifens gemäß einer weiteren Ausführungsform;
Fig. 5: Eine schematische Darstellung gummierter Festigkeitsträger von zwei Karkasslagen einer Reifenkarkasse eines erfindungsgemäßen Fahrzeugreifens gemäß einer weiteren Ausführungsform;
Fig. 6: Eine schematische Darstellung eines erfindungsgemäßen Fahrzeugreifens gemäß einer weiteren Ausführungsform;
Fig. 7: Eine schematische Darstellung eines erfindungsgemäßen Fahrzeugrades.

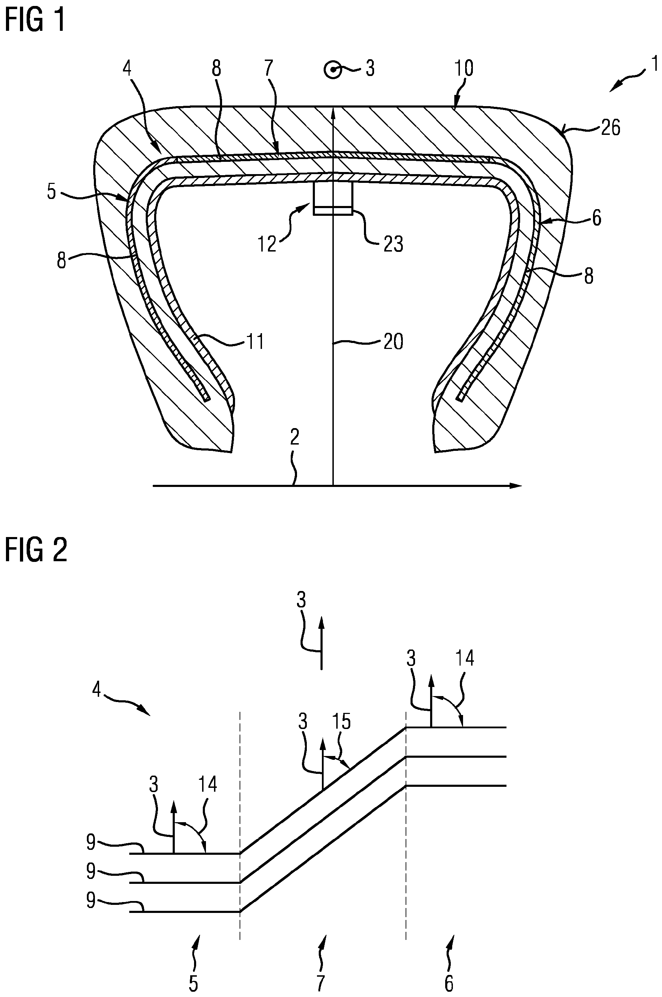

In der Figur 1 ist ein erfindungsgemäßer Fahrzeugreifen 1 gemäß einer Ausführungsform schematisch in Radialschnittansicht dargestellt. Der Fahrzeugreifen 1 ist um eine Rotationsachse 2 in eine Umlaufrichtung 3 rotierbar. Die Umlaufrichtung 3 kann auch als Umfangsrichtung bezeichnet werden.

Der Fahrzeugreifen 1 weist auf:
a) eine Reifenkarkasse 4 mit einem ersten Seitenbereich 5, einem zweiten Seitenbereich 6 und einem dazwischen angeordneten Zentralbereich 7, aufweisend zumindest eine Karkasslage 8 mit einer Vielzahl von in der Figur 1 nicht näher dargestellten gummierten Festigkeitsträgern 9, die sich jeweils durch den ersten Seitenbereich 5, den zweiten Seitenbereich 6 und den Zentralbereich 7 der Reifenkarkasse 4 erstrecken,
b) einen relativ zur Reifenkarkasse 4 radial weiter außen liegenden Laufstreifen 10,
c) eine relativ zur Reifenkarkasse 4 radial weiter innen liegende Reifeninnenschicht 11.

Der Fahrzeugreifen 1 weist eine Sensorvorrichtung 12 auf, wobei die Sensorvorrichtung 12 zur Bestimmung einer physikalisch messbaren Größe, wobei in Abhängigkeit der physikalisch messbaren Größe eine Einsatzfähigkeit des Fahrzeugreifens 1 bestimmt werden kann, geeignet ist.

Gemäß der in der Figur 1 dargestellten Ausführungsform ist die Sensorvorrichtung 12 an der Reifeninnenschicht 11 angeordnet.

Die Sensorvorrichtung 12 ist vorzugsweise formschlüssig, kraftschlüssig oder stoffschlüssig, beispielsweise mittels eines Klebemittels oder mittels eines Reifendichtmittels, mit der Reifeninnenschicht 11 verbunden.

In der Figur 2 ist ein Bereich eines erfindungsgemäßen Fahrzeugreifens 1 schematisch dargestellt. Dargestellt ist die Reifenkarkasse 4. Gemäß der Darstellung in der Figur 2 schließt ein Teil der gummierten Festigkeitsträger 9 der Karkasslage 8 bezogen auf die Umfangsrichtung im ersten Seitenbereich 5 und im zweiten Seitenbereich 6 einen Winkel 14 im Bereich von 80° bis 90° einschließt und im Zentralbereich 7 einen Winkel 15 im Bereich von 5° bis 75° einschließt.

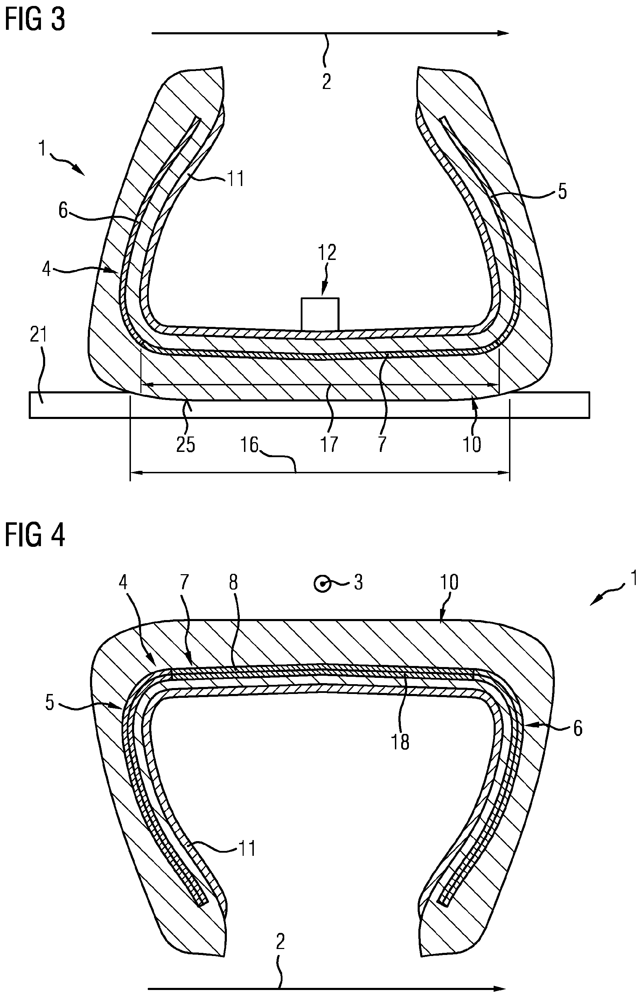

In der Figur 3 ist ein erfindungsgemäßer Fahrzeugreifen 1 gemäß einer weiteren Ausführungsform schematisch in Radialschnittansicht dargestellt, gemäß der Darstellung in der Figur 3 liegt der Quotient aus der Breite 16 der Aufstandsfläche 25 des Fahrzeugreifens 1 auf einer Fahrbahn 21 geteilt durch die Breite 17 des Zentralbereichs 7, jeweils quer zur Umfangsrichtung oder Umlaufrichtung 3, also parallel zur Rotationsachse 2, des Fahrzeugreifens 1, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05.

In der Figur 4 ist ein erfindungsgemäßer Fahrzeugreifen 1 ein Bereich gemäß einer weiteren Ausführungsform schematisch in Radialschnittansicht dargestellt. Gemäß der Darstellung in der Figur 4 umfasst die Reifenkarkasse 4 zwei Karkasslagen 8 und 18.

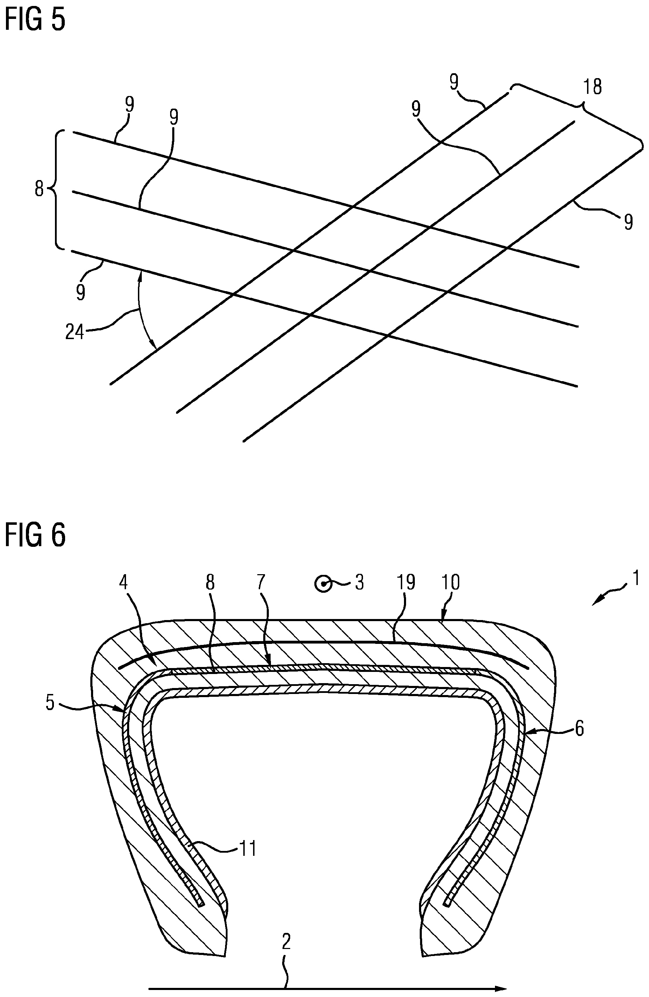

In der Figur 5 sind gummierte Festigkeitsträger 9 entsprechend der in der Figur 4 dargestellten Ausführungsform schematisch dargestellt. Bei den in der Figur 5 dargestellten gummierten Festigkeitsträgern 9 handelt es sich um gummierte Festigkeitsträger 9 der Karkasslagen 8 und 18. Die gummierten Festigkeitsträger 9 der Karkasslage 8 verlaufen parallel zueinander. Die gummierten Festigkeitsträger 9 der Karkasslage 18 verlaufen parallel zueinander.

Die gummierten Festigkeitsträger 9 der beiden Karkasslagen 8, 18 im Zentralbereich 7 schließen relativ zueinander einen Winkel 24 im Bereich von 30° bis 90°, bevorzugt im Bereich von 40° bis 80°, besonders bevorzugt im Bereich von 50° bis 70°, ganz besonders bevorzugt im Bereich von 55° bis 65°, ein.

In der Figur 6 ist ein erfindungsgemäßer Fahrzeugreifen 1 gemäß einer weiteren Ausführungsform schematisch in Radialschnittansicht dargestellt. Gemäß der Darstellung in der Figur 6 ist zwischen dem Laufstreifen 10 und der Reifenkarkasse 4 zumindest eine weitere Lage 19, bevorzugt genau eine weitere Lage 19, angeordnet.

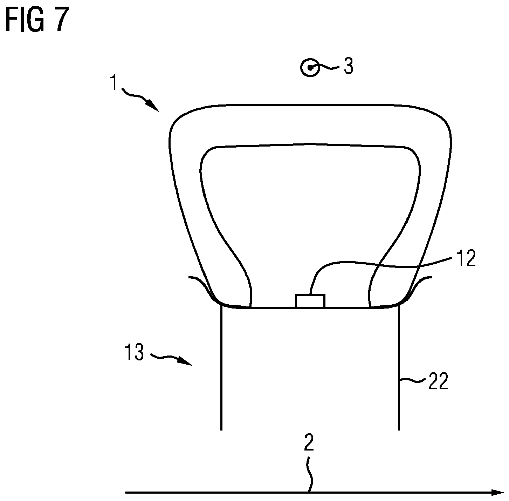

In der Figur 7 ist ein erfindungsgemäßes Fahrzeugrad 13 schematisch dargestellt. Das Fahrzeugrad 13 weist eine Felge 22 und einen Fahrzeugreifen 1 auf. Das Fahrzeugrad 13 ist in Radialschnittansicht dargestellt und um eine Rotationsachse 2 in eine Umlaufrichtung 3 rotierbar. Bei dem Fahrzeugreifen 1 kann es sich insbesondere um den erfindungsgemäßen Fahrzeugreifen 1 handeln. Insbesondere ist die Rotationsachse 2 des Fahrzeugrades 13 identisch mit der Rotationsachse 2 des erfindungsgemäßen Fahrzeugreifens 1 und die Umlaufrichtung 3 des Fahrzeugrades 13 ist identisch mit der Umlaufrichtung 3 des erfindungsgemäßen Fahrzeugreifens 1.

Das Fahrzeugrad 13 weist eine Sensorvorrichtung 12 auf. Gemäß der dargestellten Ausführungsform ist die Sensorvorrichtung 12 an der Felge 22 angeordnet.

### Bezugszeichenliste

- 1: Fahrzeugreifen
- 2: Rotationsachse
- 3: Umlaufrichtung
- 4: Reifenkarkasse
- 5: Erster Seitenbereich
- 6: Zweiter Seitenbereich
- 7: Zentralbereich
- 8: Karkasslage
- 9: Gummierte Festigkeitsträger
- 10: Laufstreifen
- 11: Reifeninnenschicht
- 12: Sensorvorrichtung
- 13: Fahrzeugrad
- 14: Winkel im ersten Seitenbereich oder im zweiten Seitenbereich
- 15: Winkel im Zentralbereich
- 16: Breite der Aufstandsfläche des Fahrzeugreifens
- 17: Breite des Zentralbereichs der Reifenkarkasse
- 18: Weitere Karkasslage
- 19: Weitere Lage
- 20: Radius des Fahrzeugreifens
- 21: Fahrbahn
- 22: Felge
- 23: Sensorkomponente
- 24: Winkel
- 25: Bodenaufstandsfläche
- 26: Außenfläche des Fahrzeugreifens

## Patentansprüche

1. Fahrzeugreifen (1), aufweisend:
a) eine Reifenkarkasse (4) mit einem ersten Seitenbereich (5), einem zweiten Seitenbereich (6) und einem dazwischen angeordneten Zentralbereich (7), aufweisend zumindest eine Karkasslage (8, 18) mit einer Vielzahl von gummierten Festigkeitsträgern (9), die sich jeweils durch den ersten Seitenbereich (5), den zweiten Seitenbereich (6) und den Zentralbereich (7) der Reifenkarkasse (4) erstrecken,
b) einen relativ zur Reifenkarkasse (4) radial weiter außen liegenden Laufstreifen (4),
c) eine relativ zur Reifenkarkasse (4) radial weiter innen liegende Reifeninnenschicht (11),
wobei zumindest ein Teil der gummierten Festigkeitsträger (9) der Karkasslage (8, 18) bezogen auf die Umfangsrichtung (3) im ersten Seitenbereich (5) und im zweiten Seitenbereich (6) einen Winkel (14) im Bereich von 80° bis 90° einschließen und im Zentralbereich (7) einen Winkel (15) im Bereich von 5° bis 75° einschließt,
**dadurch gekennzeichnet, dass** der Fahrzeugreifen (1) eine Sensorvorrichtung (12) aufweist, wobei die Sensorvorrichtung (12) zur Bestimmung einer physikalisch messbaren Größe, wobei in Abhängigkeit der physikalisch messbaren Größe eine Einsatzfähigkeit des Fahrzeugreifens (1) bestimmt werden kann, geeignet ist.

2. Fahrzeugreifen (1) nach Anspruch 1, **dadurch gekennzeichnet, dass** zumindest ein Teil der gummierten Festigkeitsträger (9) der Karkasslage (8, 18) bezogen auf die Umfangsrichtung (3) des Fahrzeugreifens (1) im ersten Seitenbereich (5) und im zweiten Seitenbereich (6) einen Winkel (14) im Bereich von 85° bis 90°, bevorzugt im Bereich von 88° bis 90°, einschließt.

3. Fahrzeugreifen (1) nach einem der Ansprüche 1 oder 2, **dadurch gekennzeichnet, dass** zumindest ein Teil der gummierten Festigkeitsträger (9) der Karkasslage (8, 18) bezogen auf die Umfangsrichtung (3) des Fahrzeugreifens (1) im Zentralbereich (7) einen Winkel (15) im Bereich von 10° bis 70°, bevorzugt im Bereich von 15° bis 55°, besonders bevorzugt im Bereich von 20° bis 35°, einschließt.

4. Fahrzeugreifen (1) nach einem der vorhergehenden Ansprüche, **dadurch gekennzeichnet, dass** der Laufstreifen (10) in radial nach außen weisender Richtung zumindest teilweise, bevorzugt vollständig, oberhalb des Zentralbereichs (7) angeordnet ist.

5. Fahrzeugreifen (1) nach einem der vorhergehenden Ansprüche, **dadurch gekennzeichnet, dass** der Quotient aus der Breite (16) der Aufstandsfläche und der Breite (17) des Zentralbereichs (7), jeweils quer zur Umfangsrichtung (3) des Fahrzeugreifens (1), im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt.

6. Fahrzeugreifen (1) nach einem der vorhergehenden Ansprüche, **dadurch gekennzeichnet, dass** die Reifenkarkasse (4) zwei oder mehr Karkasslagen (8, 18) umfasst, wobei in jeder Karkasslage (8, 18) zumindest ein Teil der gummierten Festigkeitsträger (9), bevorzugt sämtliche gummierten Festigkeitsträger (9), bezogen auf die Umfangsrichtung (3) des Fahrzeugreifens (1) im ersten Seitenbereich (5) und im zweiten Seitenbereich (6) einen Winkel (14) im Bereich von 80° bis 90° und im Zentralbereich (7) einen Winkel (15) im Bereich von 5° bis 75° einschließt.

7. Fahrzeugreifen (1) nach dem vorhergehenden Anspruch, **dadurch gekennzeichnet, dass** die Reifenkarkasse (4) zwei Karkasslagen (8, 18) umfasst, wobei die gummierten Festigkeitsträger (9) der beiden Karkasslagen (8, 18) im Zentralbereich (7) relativ zueinander einen Winkel (27) im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen.

8. Fahrzeugreifen (1) nach einem der vorhergehenden Ansprüche, **dadurch gekennzeichnet, dass** im Fahrzeugreifen (1) zwischen dem Laufstreifen (10) und der Reifenkarkasse (4) zumindest eine weitere Lage (19), bevorzugt genau eine weitere Lage (19), angeordnet ist.

9. Fahrzeugreifen (1) nach einem der vorhergehenden Ansprüche, **dadurch gekennzeichnet, dass** die Sensorvorrichtung (12) an der Reifeninnenschicht (11) des Fahrzeugreifens (1) oder an einer Außenfläche (26) des Fahrzeugreifens (1) oder an der Reifenkarkasse (4) oder in der Reifenkarkasse (4) angeordnet ist.

10. Fahrzeugreifen (1) nach einem der vorhergehenden Ansprüche, **dadurch gekennzeichnet, dass** die Sensorvorrichtung (12) eine Drucksensorkomponente (23), eine Temperatursensorkomponente (23), eine piezoelektrische Sensorkomponente (23), eine Sensorkomponente (23) geeignet zur Messung einer elektrischen Kapazität, eine Sensorkomponente (23) geeignet zur Messung einer elektrischen Induktion, eine Sensorkomponente (23) geeignet zur Messung eines elektrischen Widerstands, eine Sensorkomponente (23) geeignet zur Messung eines Magnetfeldes, eine optische Sensorkomponente (23), eine thermoelektrische Sensorkomponente (23) und/oder eine akustische Sensorkomponente (23) aufweist.

11. Fahrzeugrad (13), aufweisend eine Felge (22) und einen
Fahrzeugreifen (1), wobei der Fahrzeugreifen (1) aufweist:
a) eine Reifenkarkasse (4) mit einem ersten Seitenbereich (5), einem zweiten Seitenbereich (6) und einem dazwischen angeordneten Zentralbereich (7), aufweisend zumindest eine Karkasslage (8, 18) mit einer Vielzahl von gummierten Festigkeitsträgern (9), die sich jeweils durch den ersten Seitenbereich (5), den zweiten Seitenbereich (6) und den Zentralbereich (7) der Reifenkarkasse (4) erstrecken,
b) einen relativ zur Reifenkarkasse (4) radial weiter außen liegenden Laufstreifen (4),
c) eine relativ zur Reifenkarkasse (4) radial weiter innen liegende Reifeninnenschicht (11),
wobei zumindest ein Teil der gummierten Festigkeitsträger (9) der Karkasslage (8, 18) bezogen auf die Umfangsrichtung (3) im ersten Seitenbereich (5) und im zweiten Seitenbereich (6) einen Winkel (14) im Bereich von 80° bis 90° einschließen und im Zentralbereich (7) einen Winkel (15) im Bereich von 5° bis 75° einschließt,
**dadurch gekennzeichnet, dass** das Fahrzeugrad (13) eine Sensorvorrichtung (12) aufweist, wobei die Sensorvorrichtung (12) zur Bestimmung einer physikalisch messbaren Größe, wobei in Abhängigkeit der physikalisch messbaren Größe eine Einsatzfähigkeit des Fahrzeugreifens (1) bestimmt werden kann, geeignet ist.
